# EUROPÄISCHE PATENTANMELDUNG

(11) **EP 3 828 027 A1**
(43) Veröffentlichungstag der Anmeldung: **02.06.2021**
(21) Anmeldenummer: 19211814.9
(22) Anmeldetag: 27.11.2019
(51) Int. Cl.: B60N 2/30, B60N 2/20

(54) **SITZMODUL FÜR EIN KRAFTFAHRZEUG**

(71) Anmelder: MAGNA STEYR Fahrzeugtechnik AG & Co KG, 8041 Graz (AT)
(72) Erfinder: ERLACHER, Manuel, 9545 Radenthein (AT); PLANKA, Franz, 9433 St. Andrä (AT); RODLER, Martin, 8160 Weiz (AT); ZACHNEGGER, Harald, 8041 Graz (AT)
(74) Vertreter: Zangger, Bernd

(57) **Zusammenfassung**

Ein Sitzmodul für ein Kraftfahrzeug, umfassend ein Trägerelement (1) und zumindest eine Sitzreihe (2) mit zumindest zwei Sitzen, die auf dem Trägerelement (1) befestigt sind, wobei das Sitzmodul zumindest eine von außen zugängliche Öffnung (3) aufweist, die sich als Hohlraum (4) in das Sitzmodul erstreckt, wobei der Hohlraum (4) zumindest teilumfänglich mechanisch feste Wände aufweist, so dass das Sitzmodul dadurch angehoben werden kann, dass ein längliches Hebeelement (5), insbesondere ein Staplerzinken, von außen durch die Öffnung (3) in den Hohlraum (4) eingeführt wird und das Hebeelement (5) angehoben wird.

## Beschreibung

### Gebiet der Erfindung

Die vorliegende Erfindung betrifft ein Sitzmodul für ein Kraftfahrzeug und ein Kraftfahrzeug mit zumindest einem solchen Sitzmodul.

### Stand der Technik

Es ist bekannt, dass Kraftfahrzeuge üblicherweise Sitze, wie beispielsweise Sitzbänke, zum Transport von Personen im Kraftfahrzeug aufweisen. Die Sitze sind oft in Form von Sitzreihen angeordnet. Beispielsweise können größere PKWs, wie Vans und Kleinbusse, zusätzlich zu einer Sitzreihe die den Fahrersitz umfasst, zwei hintere Sitzreihen umfassen, die beispielsweise durch eine Seitentür des Fahrzeugs zugänglich sind, insbesondere durch eine Schiebetür.

Es ist auch bekannt, dass Kraftfahrzeuge zum Transport von Waren verwendet werden können. Sitze oder Sitzreihen sind oft auch wegklappbar oder ausbaubar, um den Raum für einen Transport von Waren zu vergrößern.

Nachteilig ist allerdings, dass bei herkömmlichen ausbaubaren Sitzen bzw. Sitzbänken der Ausbau relativ viel Zeit in Anspruch nimmt und mühsam ist. Beim Umlegen von Sitzen und Sitzbänken nehmen diese üblicherweise auch in der weggeklappten Position relativ viel Stauraum in Anspruch, so dass der für Waren bzw. Güter zur Verfügung stehende Platz reduziert ist.

### Zusammenfassung der Erfindung

Es ist eine Aufgabe der Erfindung, ein Sitzmodul für ein Kraftfahrzeug anzugeben, das eine einfache und effektive Umwandlung des Innenraums eines Kraftfahrzeugs von einem Personentransport in einen Warentransport erlaubt. Es ist auch eine Aufgabe der Erfindung ein solches Kraftfahrzeug anzugeben, dass auf einfache und effektive Weise von einem Personentransport-Fahrzeug in ein Warentransport-Fahrzeug umgewandelt werden kann.

Die Lösung der Aufgabe erfolgt durch ein Sitzmodul für ein Kraftfahrzeug, umfassend ein Trägerelement und zumindest eine Sitzreihe mit zumindest zwei Sitzen, die auf dem Trägerelement befestigt sind, wobei das Sitzmodul zumindest eine von außen zugängliche Öffnung aufweist, die sich als Hohlraum in das Sitzmodul erstreckt, wobei der Hohlraum zumindest teilumfänglich mechanisch feste Wände aufweist, so dass das Sitzmodul dadurch angehoben werden kann, dass ein längliches Hebeelement, insbesondere ein Staplerzinken, von außen durch die Öffnung in den Hohlraum eingeführt wird und das Hebeelement angehoben wird.

Erfindungsgemäß ist eine Sitzreihe mit zumindest zwei Sitzen - wobei die Sitze auch in Form einer Sitzbank bereitgestellt sein können - mit Öffnungen derart ausgebildet, dass mit Hilfe eines Hebeelements wie insbesondere eines Zinken eines Hubstaplers, die Sitzreihe auf einfache Weise in ein Fahrzeug und aus einem Fahrzeug gehoben werden kann. Die Öffnungen sind dabei so angeordnet, dass das Hebeelement, insbesondere der Staplerzinken, von außerhalb des Fahrzeuges durch die Öffnung in einen zumindest teilumfänglich von Wänden begrenzten Hohlraum eingeführt werden, sodass die Wände des Hohlraums zumindest abschnittsweise am Hebeelement anliegen, so dass das Sitzmodul gehoben und in das Kraftfahrzeug ein- und ausgebaut werden kann.

Der Hohlraum kann insbesondere die Form eines Sacklochs und/oder eines Hohlprofils haben.

Dass der Hohlraum zumindest teilumfänglich mechanisch feste Wände aufweist, umfasst die Möglichkeit, dass der Hohlraum vollumfänglich mechanisch feste Wände aufweist, und umfasst auch Hohlräume, die nicht vollumfänglich feste Wände aufweisen, wobei bevorzugt zumindest in Einbaulage oben eine feste Wand ausgebildet ist. Statt vollflächigen Wänden können beispielsweise auch Profile, Gitter- oder Stäbe ausreichende Festigkeit bieten um ein Anheben mittels Hebeelement zu ermöglichen. Möglich sind alle Formen von begrenzten Hohlräumen, die derart ausgebildet sind, dass sie ein Hebeelement, vorzugsweise einen Staplerzinken, aufnehmen können, auch wenn sie teilumfänglich, beispielsweise unten oder seitlich, keine oder nur reduzierte feste Wände bzw. Wandansätze aufweisen. Die festen Wände können beispielsweise einen c-förmigen oder n-förmigen Querschnitt bilden.

Ein erfindungsgemäßes Sitzmodul kann daher nicht lediglich während der Fertigung des Kraftfahrzeugs in das Kraftfahrzeug eingebracht werden um dort fixiert zu werden, sondern kann während der normalen Verwendung des Kraftfahrzeugs, beispielsweise durch einen Fahrzeuginhaber, mittels des Hebeelements ein- und ausgebaut werden, so dass jederzeit ein Umbau eines Fahrzeugs für den Warentransport oder für den Personentransport erfolgen kann.

Das Sitzmodul, bevorzugt das Trägerelement, weist daher die zumindest eine von außen zugängliche Öffnung auf, die sich als Hohlraum in das Sitzmodul, bevorzugt in das Trägerelement, erstreckt.

Weiterbildungen der Erfindung sind in den abhängigen Ansprüchen, der Beschreibung sowie den beigefügten Zeichnungen angegeben.

Vorzugsweise weist das Sitzmodul zwei von außen zugängliche Öffnungen auf, die sich jeweils als Hohlraum in das Sitzmodul erstrecken, wobei die Hohlräume mechanisch fest ausgebildet sind bzw. zumindest teilumfänglich mechanisch feste Wände aufweisen, so dass das Sitzmodul dadurch angehoben werden kann, dass zwei profilförmige Hebeelemente, insbesondere zwei Staplerzinken eines Hubstaplers, von außen, insbesondere von außerhalb des Kraftfahrzeuges, durch die Öffnungen in die jeweiligen Hohlräume eingeführt werden und die Hebeelemente angehoben werden. Das Sitzmodul kann dann bevorzugt mittels der zwei Zinken eines üblichen Hubstaplers bzw. Gabelstaplers aus dem Fahrzeug gehoben und in das Fahrzeug gehoben werden.

Bevorzugt umfasst das Sitzmodul zumindest zwei Sitzreihen mit jeweils zumindest zwei Sitzen, die auf dem Trägerelement befestigt sind. Die zwei Sitze können jeweils auch als Bank mit zumindest zwei Sitzplätzen ausgebildet sein. Bevorzugt sind die zwei Sitzreihen in Einbaulage oberhalb der zwei Öffnungen und Hohlraume angeordnet.

Die Sitze einer Sitzreihe sind bevorzugt mittels Sitzschienen am Trägerelement befestigt.

Bevorzugt erstreckt sich der oder die Hohlräume in Fahrzeugquerrichtung und somit bevorzugt entlang der einen oder der mehreren Sitzreihen. Die Sitzreihen verlaufen vorzugsweise oberhalb der Hohlräume, parallel zu den Hohlräumen.

Bevorzugt umfasst das Trägerelement eine Platte, die einen Boden des Sitzmoduls ausbildet. Die Platte kann einen stabilen Boden bilden, um die Sitzreihe oder Sitzreihen aufheben zu können. Die Platte kann mehrere Sitzreihen mechanisch stabil verbinden. Die Platte kann auch zum Beispiel abschnittsweise einen Fußraum für Passagiere bilden und/oder abschnittsweise mit einem Teppich ausgestattet sein.

Vorzugsweise ist zumindest ein außenliegender Abschnitt der Platte einklappbar, einfaltbar, einschiebbar oder auf sonstige Weise entfernbar. Hierdurch kann die Grundfläche des Trägerelements verkleinert werden, um das Sitzmodul durch eine kleinere Türöffnung in und aus dem Kraftfahrzeug heben zu können.

Bevorzugt umfasst das Trägerelement ein Profil und/oder einen Tunnel, um zwei Bereiche des Sitzmoduls mechanisch fest miteinander zu verbinden. Durch das Profil oder den Tunnel können insbesondere Bereiche des Sitzmoduls um zwei verschiedene Öffnungen und Hohlräume und/oder Bereiche zweier Sitzreihen miteinander verbunden werden. Ein Sitzmodul dessen Trägerelement ein Profil und/oder einen Tunnel umfasst kann vorzugsweise keine Platte umfassen oder zusätzlich eine Platte als Boden umfassen.

Die Lösung der Aufgabe erfolgt auch durch ein Kraftfahrzeug, dass einen Bodenbereich aufweist, der dazu ausgebildet ist, ein Sitzmodul, wie zuvor beschrieben, zu tragen, wobei das Kraftfahrzeug zumindest eine Türöffnung aufweist, bevorzugt eine Seitentür, die ausreichend weit geöffnet werden kann, so dass das Sitzmodul durch die Türöffnung aus dem Kraftfahrzeug und in das Kraftfahrzeug geschoben werden kann. Die Seitentür kann insbesondere als eine Schiebetür ausgeführt sein, bevorzugt mit einem oder zwei Flügeln.

Bevorzugt weisen die Sitze der Sitzreihe, bevorzugt zumindest einer hinteren Sitzreihe, des Sitzmoduls Lehnen auf, die umgeklappt werden können, bevorzugt nach vorne geklappt werden können, so dass das Sitzmodul durch die Türöffnung aus dem Kraftfahrzeug und in das Kraftfahrzeug geschoben werden kann. Durch die umklappbaren Lehnen kann das Sitzmodul insbesondere bei seitlicher Entnahme bzw. Einbringung in das Kraftfahrzeug eine geringere Querschnittsfläche aufweisen und daher eine kleinere Türöffnung ausreichend sein.

Vorzugsweise weist das Kraftfahrzeug einen Verriegelungsmechanismus auf, um ein in das Kraftfahrzeug geschobenes Sitzmodul zu verriegeln und für die Entnahme aus dem Kraftfahrzeug zu entriegeln. Hierdurch kann das Sitzmodul in seiner vorgesehenen Position im Fahrzeug gesichert werden, beispielsweise mittels Schrauben, Flügelschrauben, Schwalbenschwanz quer zur Fahrtrichtung verlaufend oder mittels diversen Schnellverschlüssen.

Zusätzlich zu einem Sitzmodul kann auch zumindest ein Warenmodul vorgesehen sein, wobei das Warenmodul ebenfalls zumindest eine, bevorzugt zwei, Öffnungen mit Hohlräumen aufweist, bevorzugt gleich angeordnet und gleich geformt wie beim Sitzmodul, so dass das Warenmodul dadurch angehoben werden kann, dass ein oder zwei profilförmige Hebeelemente, insbesondere die selben wie zum Anheben des Sitzmoduls, von außen durch die Öffnungen in die Hohlräume eingeführt werden und das Hebeelement angehoben wird. Hierdurch kann auf einfache Weise, beispielsweise mit einem Hubstapler, ein Sitzmodul in einem Kraftfahrzeug durch ein Warenmodul ersetzt werden oder umgekehrt, insbesondere durch seitliche Entnahme bzw. Einbringung des Sitzmoduls in das Fahrzeug.

Das Warenmodul kann insbesondere durch eine handelsübliche Palette gebildet werden. Die Zinken eines handelsüblichen Hubstaplers können dann als Hebeelemente verwendet werden.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung von Schritten (a bis h) zum Umbau eines Kraftfahrzeuges von der Personenbeförderung zum Warentransport mittels eines erfindungsgemäßen Sitzmoduls.
- Fig. 2: ist eine dreidimensionale Darstellung eines erfindungsgemäßen Sitzmoduls in einer ersten Ausführungsform.
- Fig. 3: ist eine dreidimensionale Darstellung eines erfindungsgemäßen Sitzmoduls in einer zweiten Ausführungsform.
- Fig. 4: ist eine dreidimensionale Darstellung eines erfindungsgemäßen Sitzmoduls in einer dritten Ausführungsform.
- Fig. 5: ist eine dreidimensionale Darstellung des erfindungsgemäßen Sitzmoduls gemäß Fig. 4, jedoch mit hochgeklapptem vorderen Bodenabschnitt.

### Detaillierte Beschreibung der Erfindung

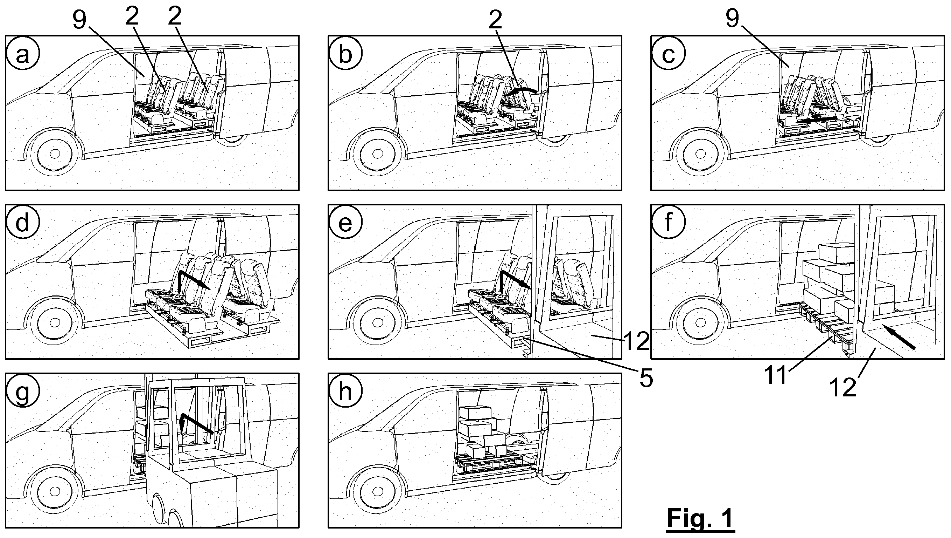

In den Fig. 1a bis h sind Schritte zum Umbau eines Kraftfahrzeuges von der Personenbeförderung zum Warentransport mittels eines erfindungsgemäßen Sitzmoduls dargestellt.

Bild a der Fig. 1 zeigt das Fahrzeug, ausgestattet mit einem erfindungsgemäßen Sitzmodul mit zwei Sitzreihen 2 und somit eingerichtet zur Personenbeförderung. Eine seitliche Schiebetür des Kraftfahrzeugs ist geöffnet, um eine seitliche Türöffnung 9 freizugeben. Das Sitzmodul kann durch die Türöffnung 9 aus dem Kraftfahrzeug gehoben werden, wie in den Bildern b bis e näher dargestellt.

Bild b zeigt das Vorklappen der hinteren Sitzreihe 2 - in Richtung des eingezeichneten Pfeils - um die Gesamtlänge des Sitzmoduls zu verringern, wenn nötig. Das Sitzmodul wird entriegelt um die fixe Verbindung zwischen Sitzmodul und Fahrzeug zu lösen.
Bild c zeigt, wie das Sitzmodul, wenn notwendig, in Richtung der Türöffnung 9 bewegt wird, durch welche das Sitzmodul entfernt wird.

Bilder d und e zeigen das Anheben und Entfernen des Sitzmoduls aus dem Fahrzeug. Dabei ist in Bild e das nötige Hebeelement 5, an einem Hubstapler 12, dargestellt, in Bild d ausgeblendet. Andere Arten von beweglichen Hebeeinrichtungen können alternativ verwendet werden. Das Sitzmodul wird mit den Hebeelementen 5 in Pfeilrichtung angehoben und danach seitlich aus dem Fahrzeug herausgeschoben.

Bilder f bis h zeigen das Beladen des Fahrzeuges mit einem Warenmodul und mit Waren und Gütern. Das Warenmodul kann mit den selben Hebeelementen 5 und dem selben Hubstapler 12 in das Kraftfahrzeug geschoben und im Kraftfahrzeug abgesenkt werden. Das Warenmodul wird durch eine handelsübliche Palette gebildet, auf welcher sich bereits zum Zeitpunkt des Einbringens in das Kraftfahrzeug Waren befinden können.

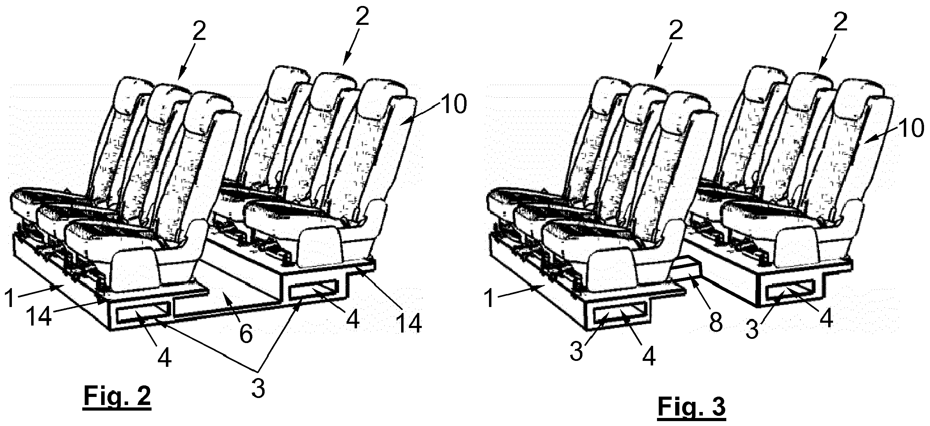

Fig. 2 und Fig. 3 zeigen mögliche Ausführungsvarianten eines Sitzmoduls. Das Sitzmodul umfasst jeweils ein Trägerelement 1 und zwei Sitzreihen 2 mit jeweils drei Sitzen, die auf dem Trägerelement 1 befestigt sind. Das Sitzmodul, nämlich das Trägerelement 1, weist zwei von außen zugängliche Öffnungen 3 auf, die sich jeweils als Hohlraum 4 in das Sitzmodul, nämlich in das Trägerelement 1 erstrecken, wobei der Hohlraum 4 jeweils mechanisch feste Wände aufweist. Die Hohlräume 4 sind insbesondere als Hohlprofile oder als vergleichbare Langlöcher des Trägerelements 1 ausgebildet.

Das Sitzmodul kann dadurch angehoben werden kann, dass ein längliches Hebeelement 5 (siehe Fig. 1), insbesondere ein Staplerzinken, von außerhalb des Fahrzeuges durch die Öffnung 3 in den Hohlraum 4 eingeführt wird und das Hebeelement 5 angehoben wird. Nach dem Anheben kann das Sitzmodul durch das Hebeelement 5, insbesondere den Hubstapler 12, aus dem Kraftfahrzeug gezogen werden.

Die Sitze der Sitzreihen 2 können mit ihren Sitzschienen an einer Anbindungsplatte 14 eines Trägerelements 1 befestigt werden. Fig. 2 zeigt eine druchgängige Platte 6, welche auch den Fußraum bildet, um die Sitzreihen 2 zu verbinde und eine Einheit - ein Modul - zu bilden.

Fig. 3 zeigt eine Verbindung zwischen den Sitzreihen 2 mittels eines Tunnels 8 bzw. eines Profils.

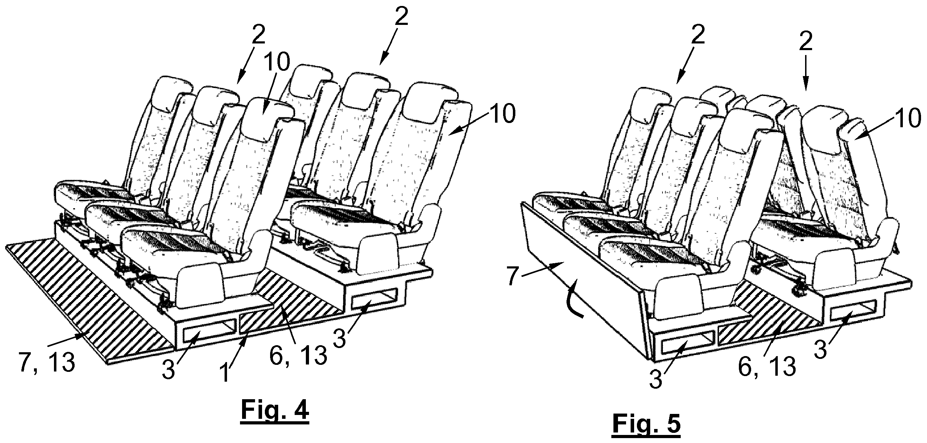

Fig. 4 und Fig. 5 zeigen eine Ausführungsform des Sitzmoduls mit klappbaren Anbauteilen. Durch das Hochklappen des außenliegenden Abschnitts 7 der Platte 6 und das Vorklappen der Lehnen 10 der hinteren Sitzreihe 2 wird weniger Platz und eine kleinere Türöffnung 9 zum Entfernen oder Einbringen des Sitzmoduls in ein Kraftfahrzeug benötigt.

In der dargestellten Ausführungsform ist zusätzlich ein Teppich 13 für die vordere Sitzreihe 2 klappbar mitverbaut, um das Ausbauen und Entfernen des Sitzmodules aus dem Fahrzeug zu erleichtern. Dadurch wird der Teppich 13 beim Warentransport nicht beansprucht. Außerdem wird die Reinigung des Teppichs 13, im ausgebauten Zustand, erleichtert.

### Bezugszeichenliste

- 1: Trägerelement
- 2: Sitzreihe
- 3: Öffnung
- 4: Hohlraum
- 5: Hebeelement
- 6: Platte
- 7: außenliegender Abschnitt der Platte
- 8: Tunnel
- 9: Türöffnung
- 10: Lehne
- 11: Warenmodul
- 12: Hubstapler
- 13: Teppich
- 14: Anbindungsplatte für Sitze

## Patentansprüche

1. Sitzmodul für ein Kraftfahrzeug, umfassend ein Trägerelement (1) und zumindest eine Sitzreihe (2) mit zumindest zwei Sitzen, die auf dem Trägerelement (1) befestigt sind,
**dadurch gekennzeichnet, dass** das Sitzmodul zumindest eine von außen zugängliche Öffnung (3) aufweist, die sich als Hohlraum (4) in das Sitzmodul erstreckt, wobei der Hohlraum (4) zumindest teilumfänglich mechanisch feste Wände aufweist, so dass das Sitzmodul dadurch angehoben werden kann, dass ein längliches Hebeelement (5), insbesondere ein Staplerzinken, von außen durch die Öffnung (3) in den Hohlraum (4) eingeführt wird und das Hebeelement (5) angehoben wird.

2. Sitzmodul nach Anspruch 1,
**dadurch gekennzeichnet, dass** das Sitzmodul zwei von außen zugängliche Öffnungen (3) aufweist, die sich jeweils als Hohlraum (4) in das Sitzmodul erstrecken, wobei die Hohlräume (4) zumindest teilumfänglich mechanisch feste Wände aufweisen, so dass das Sitzmodul dadurch angehoben werden kann, dass zwei profilförmige Hebeelemente (5), insbesondere zwei Staplerzinken eines Hubstaplers, von außen durch die Öffnungen (3) in die Hohlräume (4) eingeführt werden und die Hebeelemente (5) angehoben werden.

3. Sitzmodul nach zumindest einem der vorhergehenden Ansprüche,
**dadurch gekennzeichnet, dass** das Sitzmodul zumindest zwei Sitzreihen (2) mit jeweils zumindest zwei Sitzen umfasst, die auf dem Trägerelement (1) befestigt sind.

4. Sitzmodul nach zumindest einem der vorhergehenden Ansprüche,
**dadurch gekennzeichnet, dass** das Trägerelement (1) eine Platte (6) umfasst, die einen Boden des Sitzmoduls ausbildet.

5. Sitzmodul nach Anspruch 4,
**dadurch gekennzeichnet, dass** zumindest ein außenliegender Abschnitt (7) der Platte (6) einklappbar, einfaltbar, einschiebbar oder entfernbar ist.

6. Sitzmodul nach zumindest einem der vorhergehenden Ansprüche,
**dadurch gekennzeichnet, dass** das Trägerelement (1) ein Profil und/oder einen Tunnel (8) umfasst, um zwei Bereiche des Sitzmoduls mechanisch fest miteinander zu verbinden.

7. Kraftfahrzeug mit zumindest einem Sitzmodul nach zumindest einem der vorhergehenden Ansprüche,
**dadurch gekennzeichnet, dass** das Kraftfahrzeug einen Bodenbereich aufweist, der dazu ausgebildet ist, das Sitzmodul zu tragen und das Kraftfahrzeug zumindest eine Türöffnung (9) aufweist, bevorzugt eine Seitentür, die ausreichend weit geöffnet werden kann, so dass das Sitzmodul durch die Türöffnung (9) aus dem Kraftfahrzeug und in das Kraftfahrzeug geschoben werden kann.

8. Kraftfahrzeug nach Anspruch 7,
**dadurch gekennzeichnet, dass** die Sitze der Sitzreihe (2), bevorzugt zumindest einer hinteren Sitzreihe (2), des Sitzmoduls Lehnen (10) aufweisen, die umgeklappt werden können, bevorzugt nach vorne geklappt werden können, so dass das Sitzmodul durch die Türöffnung (9) aus dem Kraftfahrzeug und in das Kraftfahrzeug geschoben werden kann.

9. Kraftfahrzeug nach Anspruch 7 oder 8,
**dadurch gekennzeichnet, dass** das Kraftfahrzeug einen Verriegelungsmechanismus aufweist, um ein in das Kraftfahrzeug geschobenes Sitzmodul nach einem der Ansprüche 1 bis 6 zu verriegeln und für die Entnahme aus dem Kraftfahrzeug zu entriegeln.

10. Kraftfahrzeug mit zumindest einem Sitzmodul nach zumindest einem der Ansprüche 1 bis 6 und mit zumindest einem Warenmodul (11), wobei das Warenmodul (11) ebenfalls zumindest eine, bevorzugt zwei, Öffnungen (3) mit Hohlräumen (4) aufweist, bevorzugt gleich angeordnet und gleich geformt wie beim Sitzmodul, so dass das Warenmodul (11) dadurch angehoben werden kann, dass ein oder zwei profilförmige Hebeelemente (5), insbesondere die selben wie zum Anheben des Sitzmoduls, von außen durch die Öffnungen (3) in die Hohlräume (4) eingeführt werden und das Hebeelement (5) angehoben wird.
